# EUROPEAN PATENT APPLICATION

(11) **EP 1 780 668 A1**
(43) Date of publication of application: **02.05.2007**
(21) Application number: 06076967.6
(22) Date of filing: 12.03.2002
(51) Int. Cl.: G06Q 10/00, G11B 31/00

(54) **System and apparatus for accessing and transporting electronic communications using a portable storage device**

(62) Divisional of application: 02705664.7
(71) Applicant: Trek 2000 International Ltd, Singapore 508769 (SG)
(72) Inventor: Poo, Teng Pin, Singapore 508769 (SG); Low, Kim Seah, San Ramon, CA 94583 (US)
(74) Representative: Howe, Steven

(57) **Abstract**

A portable memory device that is capable of easy connection to a PC via a USB port or similar port (i.e. firewire) and includes a memory. Stored in the memory are an email program and certain information necessary to access an email account such as an email account username and password, post office protocol (POP) and simple mail transfer protocol (SMTP) information. In order to view, send and save email, a user connects the portable memory device to a first PC that is connected to a network such as the internet. The user then instructs the PC to execute the email program residing on the portable memory device. The email program executes and operates on the PC.

## Description

### FIELD OF THE INVENTION

The present invention relates to the field of electronic communication between users of personal computers. More particularly, the present invention relates to the secure retrieval, transmission, storage, and transportation of electronic communications using a portable data storage device.

### BACKGROUND OF THE INVENTION

Portable data storage devices sometimes referred to as "key chain" memory devices or Thumbdrives^{™} (TD) (which is a trademark of the assignee of the present invention) are small portable data storage devices that have become a class of indispensable peripherals that are widely utilized in business, educational and home computing. These devices are very small in comparison with other data storage devices such as personal computers (PC's), personal digital assistants (PDA's), magnetic disks, or compact disks (CD's). Indeed, the name "keychain" memory device describes the devices as similar in size to a key. Portable data storage devices are generally not permanently fitted to a particular host platform, such as a PC. Rather, they can be conveniently removed from and attached to any computer having the appropriate connection port (e.g., a serial bus port like a USB port, or IEEE 1394 ("Firewire") port). Thus, these portable data storage devices enable a user to transfer data among different computers that are not otherwise connected. Because these devices utilize a non-volatile solid-state memory (e.g., flash memory) as the storage medium they do not require moving parts or a mechanical drive mechanism for accessing data. The absence of a drive mechanism enables portable data storage devices to be more compact than surface storage devices such as magnetic disks and CDs. Also, because there are no moving parts, reading and writing to the memory can be done much more rapidly than to magnetic disks and CDs. Portable data storage devices also have a much higher memory capacity than magnetic disks, holding up to 256 megabytes, as compared to 1.4 megabytes for magnetic disks.

Communication by email has become a common means of communication in modem society. Users rely on email to disseminate information, transact business, and communicate with family, friends and co-workers. Users also rely on email to communicate important information that is confidential or private.

Typically, the ability to receive and send email requires the use of a personal computer (PC) that is connected to an electronic network such as a local area network or the internet. Users create email messages on a PC that is connected to a network and then transmit them over the network to an email server that stores the email in the recipient's email account. The recipient of the email accesses their email account using a PC connected to the same network as the transmitting PC. The email can then be viewed or saved by the recipient.

Although email communication has proven useful, its utility is limited by the fact that to access and view email users must be sitting at a personal computer that is connected to a network such as the internet. Thus, when a user travels to a location that does not have access to a network they must travel with their PC in order to view email that has been saved to the PC's memory. Dependency on this system is inconvenient for users who cannot or prefer not to transport bulky electronic equipment.

Another problem occurs when users access and view their email using a PC that does not belong to them. Accessing or viewing email using a PC belonging to another person can create privacy and security concerns for users because the email may be downloaded to the PC's memory. The user's privacy may be compromised if the owner or subsequent users of the PC view email that has been inadvertently saved to the PC's memory.

An additional problem with this system is that the email program, such as Microsoft Outlook®, operating on a PC is often configured to retrieve email from a certain account (typically, the account of the PC's owner). Thus in order to access email from a different account, the email program settings must be reconfigured so that the program retrieves email from the user's email account instead of the PC owner's email account. Reconfiguring the program settings can be time consuming and difficult, and even impossible for inexperienced users.

### SUMMARY OF THE INVENTION

Accordingly, it is an object of the present invention to provide a system and apparatus that enables users to access, view and send email with little user interaction using any PC connected to a network.

It is a further object of the present invention to provide an apparatus and method by which a user can conveniently transport email from one location to another. These and other objects are achieved by the present invention comprising a portable memory device that is capable of easy connection to a PC via a USB port or similar port (i.e., firewire) and memory. Stored to the memory are an email program and certain information necessary to access an email account (i.e., email account usermame and password, post office protocol (POP) and simple mail transfer protocol (SMTP) information).

In order to view, send and save email, a user connects the portable memory device (Thumbdrive ™ or TD) to a first PC that is connected to a network such as the internet. The user then instructs the PC to execute the email program residing on the TD. The TD email program executes and operates on the PC. During the initial use of the TD, the user may be prompted to provide the email account password, user name, and simple mail transfer protocol (SMTP) and post office protocol (POP) information for each email account that the user wishes to access. The TD email program accesses via the internet the user's first email account residing on an email server. The email messages are downloaded from the user's email account to the TD for viewing on the first PC. The user then directs the TD email program to save selected email messages to the TD memory. The user can also send email messages using the TD email program via the email account.

In a further embodiment, the TD email program may access a second email account of the user and email messages are downloaded to the TD memory for viewing on the first PC. The user directs the TD email program to save selected emails to the TD memory. The user can send email from the second email account using the TD email program.

In yet another embodiment, email messages are automatically saved to the TD memory and the user deletes those emails that the user does not wish to store in the TD memory.

After all email accounts have been accessed, the user disconnects the TD and transports it to a second location where a second PC is present. The user connects the TD to the second PC and executes the TD email program allowing the user to view the saved email. This allows users to view their email in any location to which the TD can be transported and where a PC can be found, including locations from which there is no access to the internet or similar networks.

The disclosed invention also provides a method for retrieving and storing email messages in a manner that protects the privacy and confidence of the user. In this embodiment, during the process whereby emails are accessed, viewed, transmitted and saved emails to the TD memory, the TD email program prevents or avoids the user's email messages from being written to the PC memory, thus preventing subsequent users of the PC from viewing the user's email messages.

### BRIEF DESCRIPTION OF THE DRAWINGS

The objects, features, and advantages of the present invention will be apparent from the following detailed description of the preferred embodiment of the invention with references to the following drawings.

**Fig. 1A.** is a block diagram illustrating functional blocks of one embodiment of the portable storage device according to the present invention and an illustrative configuration thereof.

**Fig. 1B.** illustrates a networked personal computer email communication system and a non-networked personal computer system with a portable data storage device for viewing, sending and storing email and transporting email between the two personal computer systems according to the present invention and an illustrative configuration thereof.

**Fig. 2.** illustrates a flow diagram that describes how a portable data storage device accesses the internet via the networked personal computer system according to the present invention and an illustrative configuration thereof.

**Fig. 3.** illustrates a flow diagram that describes how a portable data storage device accesses an email account via a networked personal computer system and saves the email to a portable data storage device.

**Fig. 4.** illustrates a flow diagram that describes how a user sends email using the email program residing on a portable data storage device that is connected to a personal computer connected to a network according to the present invention and an illustrative configuration thereof.

**Fig. 5.** illustrates a flow diagram that describes the preferred embodiment of how a portable data storage device is transported and connected to a non-networked personal computer system and how a user views the email stored in the memory of a portable data storage device according to the present invention and an illustrative configuration thereof.

### DETAILED DESCRIPTION OF THE INVENTION

The present invention will now be described more fully with reference to the accompanying drawings, in which preferred embodiments of the invention are shown. The present invention may, however, be embodied in many different forms and should not be construed as being limited to the embodiments set forth herein; rather these embodiments are provided so that this disclosure will be thorough and complete and will fully convey the invention to those skilled in the art. Indeed, the invention is intended to cover alternatives, modifications and equivalents of these embodiments, which will be included within the scope and spirit of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details. In other instances, well known methods, procedures, components, and circuits have not been described in detail so as not to unnecessarily obscure aspects of the present invention.

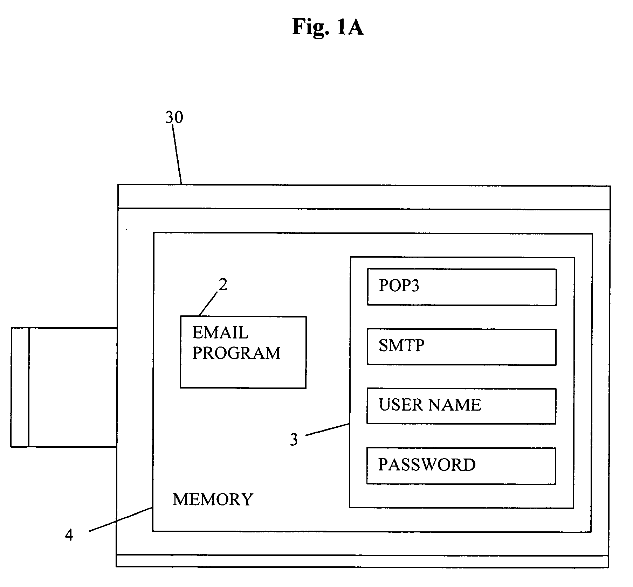

**Figure 1A** is a block diagram illustrating functional blocks of one embodiment of the portable storage device of the present invention and an illustrative configuration thereof. **Figure 1A** shows a portable data storage device **30** that is a small handheld device capable of fitting substantially in a closed fist and capable of direct connection via a universal serial bus port or similar port (i.e., firewire) to a personal computer without wire interconnection. The portable data storage device **30** includes flash memory **4,** in which an email program **2** and email account data **3** for each user email account (i.e., email account password, user name, simple mail transfer protocol (SMTP) and post office protocol (POP) information) are stored. In one embodiment, the email program **2** is pre-installed in the memory **4** of the portable data storage device **30** by the manufacturer or reseller of the device and the email account data **3** is stored to the memory **4** by the user during the initialization process. In an alternative embodiment, the email program is downloaded from the internet or CD ROM to the device's memory **4** by the user. The architecture of a portable data storage device is described in U.S. Patent application entitled "A Portable Device Having Biometrics-Based Authentication Capabilities" with Ser. No. 09/898,365, filed on July 3, 2001.

Note that it is further possible within the scope of the invention to provide a wireless interconnection between the TD and the PC.

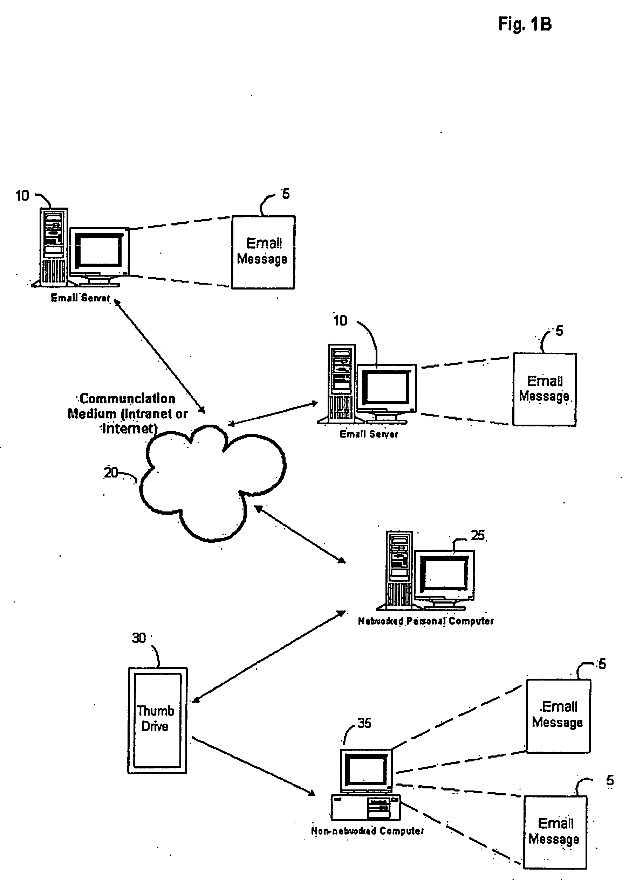

The general architecture of the email storage and transportation system is provided in **Figure 1B.** Shown in **Figure 1B** is a portable data storage device (Thumbdrive ™ or TD) **30** capable of storing an email program **2,** electronic communications (email) 5 and email account data **3.** Also illustrated in **Figure 1B** is a networked desktop personal computer (PC) **25** capable of operating the email program **2** and accessing a user's email account located on an email server **10** via a communication medium **20.** The PC **25** may be any type of computing device that is connected to the communication medium **20** and capable of accessing an email account on an email server. The communication medium **20** is understood to include one or more communication networks such as the internet and may include one or more private networks. The email server **10** is a computer that is connected to the internet and which receives and transmits email from and to other PC's **25** connected to the internet. The email server **10** also stores email messages **5** addressed to a user in the user's personal email account. Email users can access email sent to them by accessing the email server 10 through a PC **25** that is connected to the internet **20.** Also illustrated in **Figure 1B** is a non-networked PC **35** capable of operating the email program on the TD **30** and viewing the user's email **5** that is stored on the TD **30.** The non-networked computer is understood to include PC's that are connected to a different network than the networked PC.

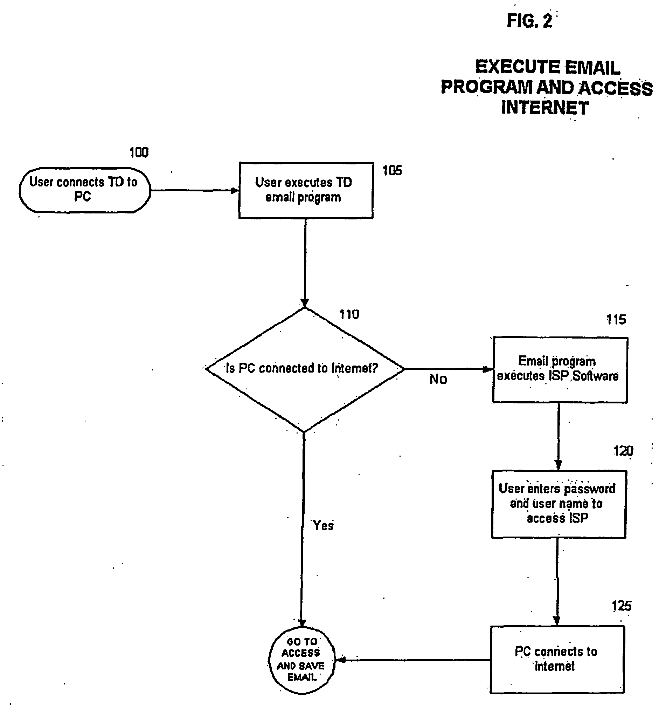

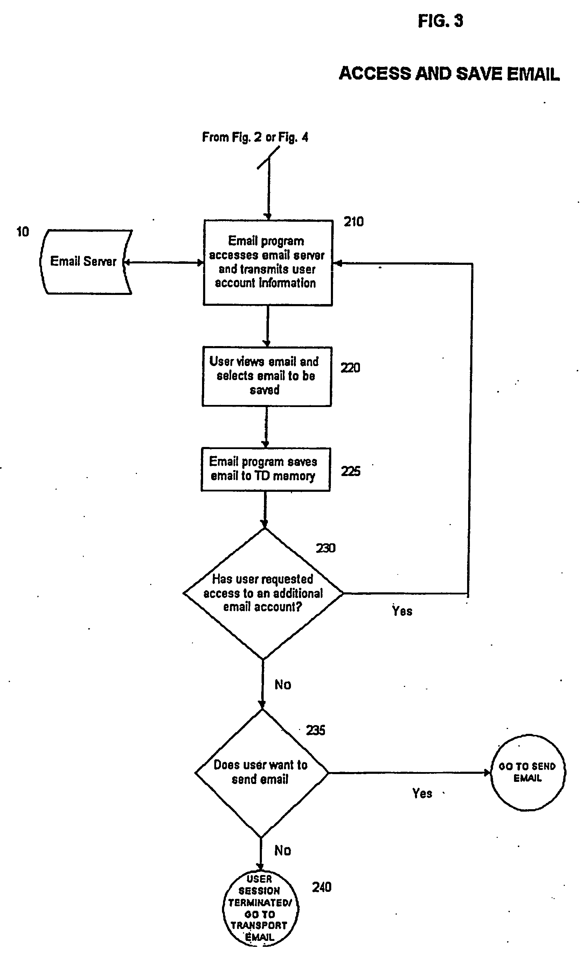

**Figure 2** illustrates a flow diagram of the operation that occurs when the user connects the TD **30 to** the PC **25** (step **100),** executes the email program **2** (step 105) and connects to the internet **20.**(steps **110** through **125).** To access an email account, the user connects the TD **30** to the PC **25** (step 100). The user then causes the PC **25** to execute the email program **2** residing in the memory **4** of the TD **30** (step **105).** In an alternative embodiment, this step **105** will occur automatically. The email program 2 then determines if the PC **25** is connected to the internet **20** (step **115).** If the PC **25** is not connected to the internet **20,** then the email program **2** executes the internet access program that causes the PC **25** to connect to an internet service provider (ISP) such as Earthlink or AOL (step **115).** The email program **2** then prompts the user to provide to the internet access program the password and user name required to access the ISP (step **120).** In an alternative embodiment, the internet access program the password and user name are stored in the memory **4** of the TD **30** and are provided automatically by the email program **2.** The PC **25** connects to the internet **20** (step **125).**

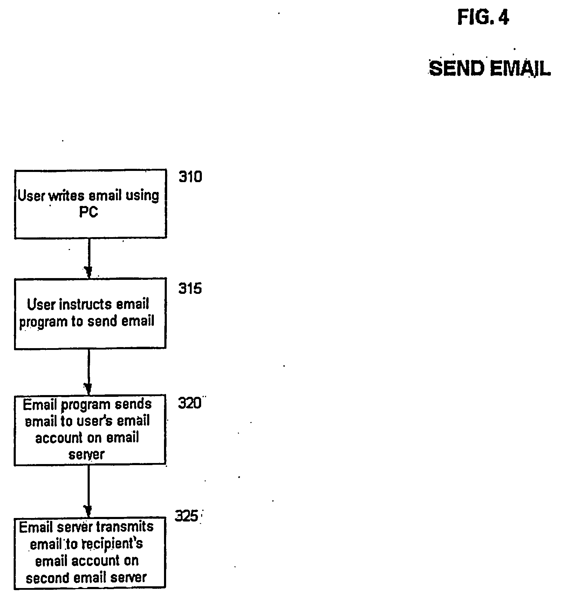

**Figure 3** illustrates one embodiment of the present invention where the email program **2** accesses the user's email account and allows the user to view and save email messages **5** to the TD **30.** In step **210,** after the PC **25** has been connected to the internet **20,** the email program **2** accesses the first email server **10** and transmits to the email server **10** the email account data **3** (designated by the user during the initialization of the TD **30)** allowing the email program **2** to access the user's email account (step **210).** The user views their email **5** and selects those emails **5** that the user would like to save for viewing at a later time (step **220).** The email program **2** saves the selected emails **5** to the TD memory **4** (step **225).** The email program **2** determines if the user has designated additional email accounts to access (step **230).** If yes, then the email program **2** accesses the server **10** that is hosting the additional email account (step **210).** The user then views the email **5** in the additional account and selects email **5** to be saved to the TD memory **4** (step **220).** In an alternative embodiment, email **5** is automatically saved to the TD memory **4** and the user deletes those emails **5** that the user does not wish to store to the TD memory **4.** The email program **2** then saves the email **5** to the TD memory **4** (step **225).** If no, then the email program **2** determines whether the user wishes to send email **5.** If yes, then the user sends email **5** as described in Figure **4.** If no, then the email program **2** terminates the user session (step **235)** and erases any email stored in the PC **25** memory (step **240).**

In an alternative embodiment, the invention disclosed in U.S. Patent application entitled "A Portable Device Having Biometrics-Based Authentication Capabilities" with Ser. No. 09/898,365, filed on July 3, 2001, and assigned to the assignee of the present invention, which consists of a biometric authentication security method and system is used in conjunction with the present invention. The biometric authentication security system disclosed in the '356 patent application prevents unauthorized access to information stored on a portable data storage device. Use of the disclosed biometric security system in conjunction with the present invention would allow access to the email program, email access data **3** (i.e., user email account password, usemame, POP and SMTP information) and user email only upon biometric verification. Advantageously, email access is protected against unauthorized use.

**Figure 4** illustrates one embodiment of the process and system of the present invention by which email messages **5** are transmitted by the user. In step **310,** the user writes the email message **5** while in the email program **2** environment. In step **315,** the user instructs the email program **2** to send the email message **5** to the recipient. The email program **2** transmits the email message **5** to the user's email account residing on the email server **10** using the SMTP 3 information stored in the TD memory **4.** The email server **10** transmits the email **5** to the recipient's email account on a second email server (step **325).**

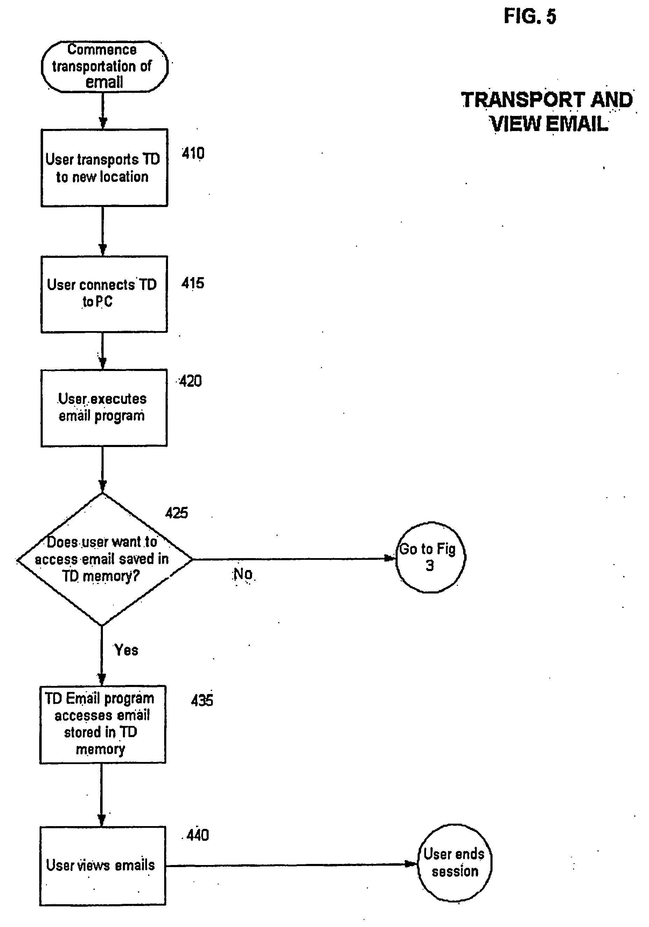

**Figure 5** illustrates one embodiment of the process and system of the present invention by which email saved to the TD memory **4** is transported and viewed with a second PC **35.** In step **410,** the user transports the TD **30** to any location with a second PC **35.** The user connects the TD **30** to the PC 35 (step **415).** The user executes the email program **2** (step **420).** The email program **2** then prompts the user to select whether to access the user's email account or access email **5** that is saved in the TD memory **4** (step **425).** If the user chooses to access the email **5** saved in the TD memory **4,** then the email program **2** accesses the email **5** stored in the TD memory **4** (step **435)** and allows the user to view, manipulate or delete email **5** (step **440).** If the user chooses to access the user's email account, then the email program accesses the user's email accounts as set forth in **Figure 3.**

It is to be understood that the above description is only of the preferred embodiments of the invention. One skilled in the art may devise numerous other arrangements without departing from the spirit and scope of the invention. The invention is thus limited only as defined in the accompanying claims.

## Claims

1. An apparatus comprising:
a unitary portable data storage device having a:
universal serial bus (USB) connector adapted to the storage device, the device capable of direct connection with a personal computer via the connector;
and memory
the memory having an email program residing therein capable of accessing a remote server via a computer connected to a network.

2. The portable data storage device as in claim 1 further comprising a non-volatile memory capable of storing email data.

3. The portable data storage device as in claim 1 wherein the non-volatile memory of the portable data storage device comprises flash memory.

4. The portable data storage device as in claim 1 where the memory further includes simple mail transfer protocol data.

5. The portable data storage device as in claim 1 where the memory further includes post office protocol data.

6. The portable data storage device as in claim 1 where the memory further includes an email account password.

7. The portable data storage device as in claim 1 where the memory further includes an email account user name.

8. An apparatus comprising:
a unitary portable data storage device that can fit substantially in a closed fist having a
universal serial bus (USB) connector adapted to the storage device, the device capable of direct connection with a personal computer via the connector;
and memory
the memory having an email program residing therein capable of accessing a remote server via a computer connected to a network.

9. The portable data storage device as in claim 8 further comprising a non-volatile memory capable of storing email data.

10. The portable data storage device as in claim 8 wherein the non-volatile memory of the portable data storage device comprises flash memory.

11. The portable data storage device as in claim 8 where the memory further includes simple mail transfer protocol data.

12. The portable data storage device as in claim 8 where the memory further includes post office protocol data.

13. The portable data storage device as in claim 8 where the memory further includes an email account password.

14. The portable data storage device as in claim 8 where the memory further includes an email account user name.

15. A method of accessing and viewing email messages, the method comprising the steps of:
(a) connecting a portable data storage device to the communication port of a personal computer via a universal serial bus;
(c) executing the email program residing on the portable storage device;
(d) contacting an email server via a network;
(e) transmitting email account data to the email server;
(f) downloading email messages from the email server to the memory of the portable data storage device; and
(g) displaying email messages for the user to view.

16. A method as in claim 15, in which the email program stores email messages to the memory of the portable data storage device.

17. A method as in claim 15, in which the email program transmits email messages prepared by the user to a recipient's email account via a network.

18. A method as in claim 15, in which the email program accesses multiple email accounts of the user.

19. A method as in claim 15, whereby the email program executes the PC's internet access program.

20. The accessing and viewing method as recited in claim 15 wherein the portable data storage device is connected to any computing device capable of operating the email program and accessing a network.

21. A method of transporting and viewing electronic communications, the method comprising the steps of:
(a) transporting the portable data storage device to a second location where a personal computer can be found;
(b) connecting the portable data storage device to a the communication port of the personal computer via a universal serial bus (USB);
(c) executing an email program residing on the portable storage device; and
(d) accessing and presenting for viewing by the user the email messages stored in the memory of the portable data storage device.

22. The transportation and viewing method as recited in claim 21 wherein the portable data storage device is connected to any computing device capable of operating the email program and accessing a network.
